# EUROPEAN PATENT SPECIFICATION

(11) **EP 4 446 237 B1**
(45) Date of publication and mention of the grant of the patent: **27.05.2026**
(21) Application number: 24169822.4
(22) Date of filing: 12.04.2024
(51) Int. Cl.: B64D 41/00, F02D 9/00

(54) **AUTONOMOUS AUXILIARY POWER UNIT SHUTDOWN AND AUTOMATIC COOLDOWN TIME**
AUTONOME HILFSTRIEBWERKABSCHALTUNG UND AUTOMATISCHE KÜHLZEIT
ARRÊT DE GROUPE AUXILIAIRE DE PUISSANCE AUTONOME ET TEMPS DE REFROIDISSEMENT AUTOMATIQUE

(30) Priority: 14.04.2023 US 202363459357 P
(43) Date of publication of application: 16.10.2024
(73) Proprietor: Embraer S.A., São José dos Campos, 12227-901-SP (BR)
(72) Inventor: LIMA, Mauricio Rodrigues, 12227-901 São José dos Campos, SP (BR)
(74) Representative: Liesegang, Eva

(56) References cited:
- EP-A1- 2 554 482
- EP-A1- 3 680 469
- US-A1- 2011 127 372
- US-A1- 2018 237 153

## Description

### FIELD

The technology relates to aircraft, and more particularly to an Auxiliary Power Unit (APU) control system and methods and systems for more efficiently operating and shutting down an APU. The technology described in this specification is provided in this context with APU operation being an object of the innovation.

### BACKGROUND & SUMMARY

In the aerospace industry, an Auxiliary Power Unit refers to an onboard device that consists of a Gas Turbine Engine used in aircraft operation to provide pneumatic and/or shaft power to the aircraft systems.

Typically, APU pneumatic power/compressed air supply from the APU's gas turbine is used by the aircraft environmental control system to pressurize the aircraft cabin and to feed the aircraft air conditioning systems. APU pneumatic power is also used to start the main engines. The APU's shaft power is typically converted to electrical power that is used to feed the aircraft systems in a situation where the main engine electrical generator or the aircraft batteries are not available.

The APU utilizes aircraft fuel to operate and provide power. Therefore, the APU is, along with the main engine, an aircraft fuel consumer and carbon emission source. See for example US 2021 0276725. Improvements are therefore possible and desirable to decrease the amount of fuel the APU consumes. Further prior art is known from US 2018/237153 A1, which discloses a system and method for controlling an inlet door of an auxiliary power unit (APU). It is determined whether a condition to inhibit a start of the APU is present. If no condition to inhibit the start of the APU is present, a door-opening signal comprising instructions to cause the inlet door to be commanded to an open position in advance of a prospective command to start the APU is output. If the condition to inhibit the start of the APU is present, a door-closing signal comprising instructions to cause the inlet door to be commanded to a closed position is output.

EP 3 680 469 A1, which discloses a system and method for adaptively controlling a cooldown cycle of an auxiliary power unit (APU) that is operating and rotating at a rotational speed including reducing the rotational speed of the APU to a predetermined cooldown speed magnitude that ensures combustor inlet temperature has reached a predetermined temperature value, determining, based on one or more of operational parameters of the APU, when a lean blowout of the APU is either imminent or has occurred, and when a lean blowout is imminent or has occurred, varying one or more parameters associated with the shutdown/cooldown cycle.

US 201 1/127372 A1, which discloses a systems and methods for operating aircraft power systems. A power system in accordance with one embodiment of the invention includes an aircraft auxiliary power unit and a controller coupled to the aircraft auxiliary power unit, with the controller being configured to automatically stop the auxiliary power unit while the auxiliary power unit is functioning normally. The controller can also be configured to automatically start the auxiliary power unit in-flight when power supplied or expected to be supplied to a subsystem of the aircraft has a non-zero value at or below a threshold value. The controller may also be configured to start the auxiliary power unit when a load or expected load on the subsystem meets or exceeds a threshold value.

EP 2 554 482 A1, which discloses an APU having a control for controlling a load on the APU from an associated aircraft. The control further receives information with regard to a temperature challenge around the APU. If the temperature challenge exceeds a predetermined threshold, then the control operates the APU with a reduced load in a cool down cycle to reduce the heat load from the APU on an associated tail cone. A method of selectively cooling an APU is also disclosed.

The invention is defined in the claims.

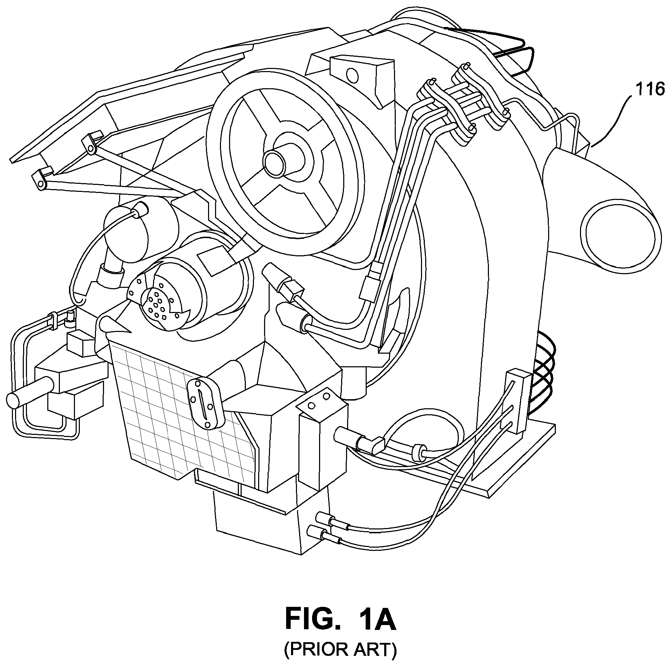

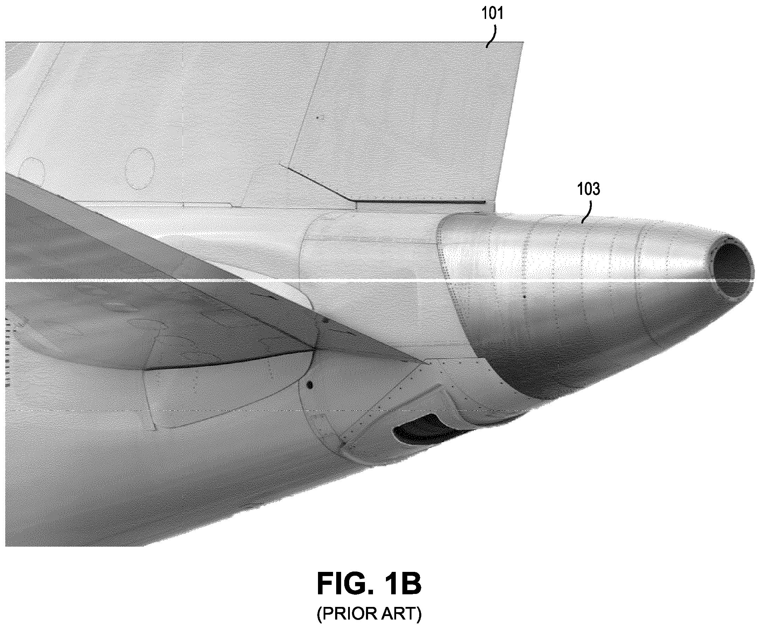

In more detail, the APU used in an aircraft system is typically a constant speed, integral bleed, continuous cycle gas turbine engine. As shown in FIG. 1A, the gas turbine features include a compressor (usually centrifugal), a combustor and a turbine. The APU is often installed on board the aircraft within an APU compartment in the aircraft tail cone at the back of the aircraft (see FIG. 1B) or in a nacelle. There are many types of APUs with different specifications. One example APU is rated at approximately six-hundred horsepower and utilizes a single-stage compressor impeller and a two-stage axial turbine mounted on a common rotor shaft.

The APU principle of operation generally consists of the following: the APU start is initiated when commanded by the aircraft pilot, copilot or other flight crew in the cockpit (hereinafter, "pilot" refers to any or all such personnel). Often this involves turning the APU on and then momentarily depressing a "START" control to start the APU. Once commanded, aircraft systems will provide electrical or pneumatic power to accelerate the APU compressor to a point where fuel can be added to the combustor and ignited. After the APU combustor is lit, the aircraft power that supports APU start is gradually removed until APU combustion is sustained by the mixture of APU compressor air and fuel. APU start is concluded once the APU reaches its 100% rated speed, which is typically indicated on the aircraft instrument panel. It typically takes a few minutes for the APU to come up to speed. After APU start, at the 100% rated speed, the APU enters into steady state operation where it is capable of providing electrical power and/or pneumatic power to the aircraft.

The principle of APU operation consists of the following: the aircraft air inlet system provides air to the APU compressor. Pressurized air is conducted to the APU combustor. At this stage, fuel is added to the combustor and the mixture is auto-ignited and directed to the APU turbine. As the air expands, the turbine's rotation provides shaft power to the accessories linked to the APU shaft (typically an electrical generator). Pressurized air is bled from the APU compressor to feed pneumatic power to the aircraft systems.

The APU is designed to provide electrical/pneumatic power according to the aircraft demand. The design includes different operating conditions, such as:
- ground operation and electrical power only
- ground operation and pneumatic power only, mainly when the external electrical is the source
- ground operation and pneumatic/electrical power
- in-flight operation and pneumatic/electrical power.

It is relevant to note that these different APU operating conditions demand electrical/pneumatic power before starting the main engines on ground. After the main engines start, usually, the main engines become the pneumatic/electrical source for the aircraft and the APU becomes a standby power source.

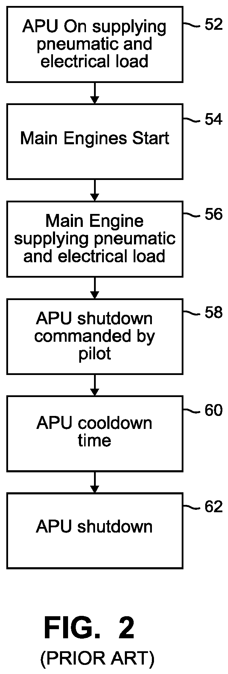

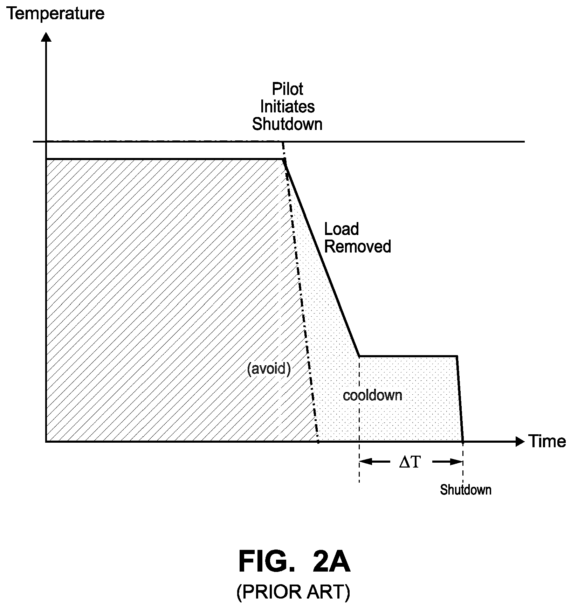

When the APU is no longer needed, the pilot may command a shutdown. During a normal APU shutdown, a cooldown cycle is performed. During a normal shutdown sequence cooldown period (see prior art FIG. 2A), the APU pneumatic load and the APU generator/electrical load are removed aiming to stabilize the APU at a lower temperature before completing the shutdown. This cooldown can reduce the risk of thermal shock which can damage the machine (e.g., providing a cooldown can extend the life of the turbine of the APU). In addition, the cooldown cycle lowers combustor and atomizer skin temperatures to prevent coking. The cooldown time magnitude/duration may vary from engine type-to-engine type, or even between engines of the same type, and will often depend on the aircraft installation. Often the cooldown period once the APU temperature has stabilized may be 2 or 3 minutes. The APU may be shut down at the end of this cooldown period.

On some aircraft, in order to protect the APU or the aircraft, an immediate automatic APU shutdown may occur either on the ground or in flight, upon detecting any of the following conditions:

On the ground:
- fire
- overtemperature
- overspeed
- underspeed
- failure to start
- failure to accelerate
- failure to light
- loss of speed data
- external short
- loss of ESU (or FADEC) signal
- ESU (or FADEC) failure
- bleed valve opening
- low oil pressure
- high oil temperature
- oil pressure switch short
- loss of EGT.

In flight:
- overspeed
- underspeed
- failure to start
- failure to accelerate
- failure to light
- loss of speed data
- external short
- loss of ESU (or FADEC) signal
- ESU (or FADEC) failure.

See e.g., EMBRAER 135/145 Auxiliary Power Unit; Embraer Operations Manual Section 6-22 Auxiliary Power Unit 16-221-001 (30 August 1990).

### BRIEF DESCRIPTION OF THE DRAWINGS

FIG. 1A shows a prior art APU.
FIG. 1B shows a prior art APU tail cone compartment on an aircraft.
FIG. 2 shows an example prior art APU shutdown process.
FIG. 2A shows a prior art APU cooldown period.
FIG. 3 shows an example aircraft including APU control system providing autonomous APU shutdown and automatic cooldown time.
FIG. 4 illustrates a flowchart of example autonomous APU shutdown and automatic cooldown time.
FIG. 5 shows an example timing diagram.

### DETAILED DESCRIPTION OF NON-LIMITING EMBODIMENTS

In the current state of the art, APU control technology does not take into account APU power demand condition in order to start counting the cooldown time. The cooldown time is just initiated when the APU control unit receives the engine shutdown input (e.g. master switch) directly from the pilot or indirectly, depending on the aircraft systems architecture (see Fig.2).

Most airports hate sharp annoying noise of the APU and most airlines hate the costs of extra fuel the APU burns. Nowadays, the pilots therefore command the APU shutdown as soon as possible. Airlines have encouraged pilots to shut down the APU right after the main engines start. However, since shutdown time may depend on the cockpit workload, it can take longer for the pilots to shut down the APU than expected by airlines. Meanwhile, the APU fuel consumption is based on the APU power demanded by the aircraft and time (duration) of operation. Thus, decreasing the APU time of operation reduces noise, saves fuel, and if done properly will increase the operating life of the APU.

The technology herein will hereinafter be described in conjunction with figures to depict the system and pilot interaction face to autonomous APU shutdown. The technology herein will have an automatic cooldown time start and an autonomous APU shutdown right after main engines start if the APU is not supplying any power to the aircraft, such as, pneumatic, electrical, etc.

The autonomous APU shutdown will reduce the pilot workload in the cockpit, and as a convenience, after APU shutdown, the pilot can move the master switch 152 to the "stop" position.

The autonomous APU shutdown and automatic cooldown time will reduce the APU operation time on ground, resulting in fuel burn reduction, cost saving and emissions reduction of many tons of CO2 per year.

### Example Aircraft with APU Control System

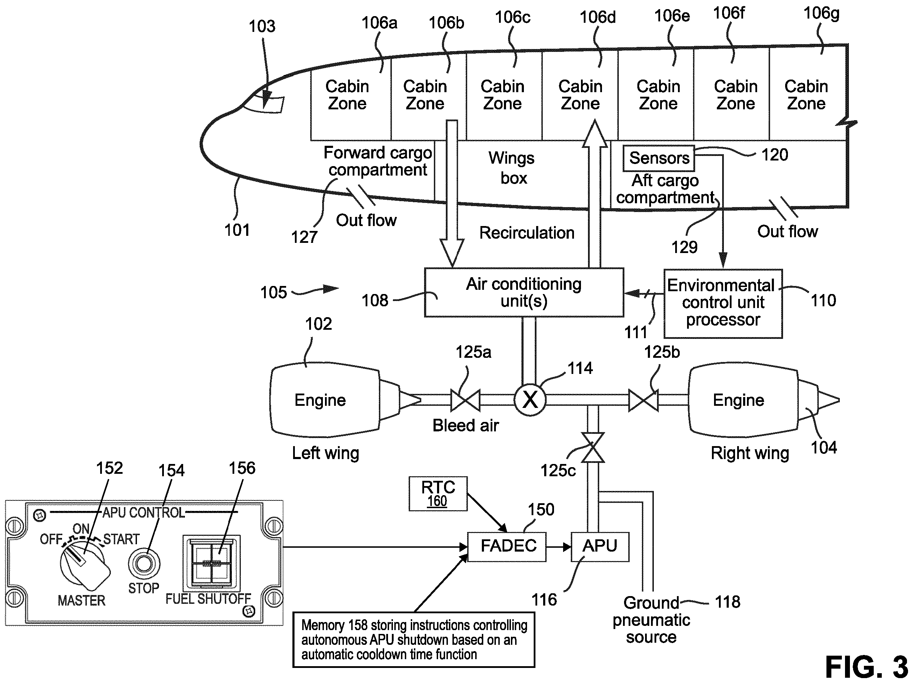

FIG. 3 illustrates working mechanisms of an embodiment of an aircraft including an APU 116 and an APU control system 150. In this aircraft, the normal operation of main gas turbine jet engines 102, 104 produce air that is both compressed (high pressure) and heated (high temperature). While the aircraft is flying, the engines 102, 104 themselves provide a convenient source of pressurized hot air to for example maintain cabin temperature and pressure. In particular, such gas turbine engines 102, 104 use an initial stage air compressor to feed the engine with compressed air. Some of this compressed heated air from certain compressor stages of the operating gas turbine engines 102, 104 is bled from the engine and used for other purposes (e.g., cabin pressurization and temperature maintenance by an environmental control system or ECS under control of an environmental control unit processor 110) without adversely affecting engine operation and efficiency.

Bleed air provided by the APU 116, the ground pneumatic source 118, the left engine(s) 102, the right engine(s) 104 is supplied for example via bleed airflow manifold and associated pressure regulators and temperature limiters to the ECS air conditioning units 108 of the aircraft. During ground operation of the aircraft, the main engines 102, 104 are typically not operating or are not operating at full capacity. Accordingly, compressed air is supplied from a different source. Such other bleed air sources for ground operation include the APU 116 and the ground pneumatic sources 118.

In one non-limiting example embodiment, the APU 116 is a constant speed, integral bleed, continuous cycle gas turbine engine as described above. Figure 1A shows a non-limiting example of an APU 116 - in this case a Pratt & Whitney APS2300 APU comprising an integral bleed, constant speed, continuous cycle gas turbine engine that incorporates a single-stage centrifugal compressor, a reverse flow annular combustor, and a two-stage axial turbine. See for example USP 7,204,090. Other types of conventional APUs 116 can be used.

In one embodiment, the APU 116 includes a power section, a compressor and a gearbox. The APU 116 power section may be a gas turbine that rotates the APU's main shaft. A compressor mounted on the main shaft provides pneumatic power to the aircraft. The compressor typically has two actuated devices: inlet guide vanes which regulate airflow to the load compressor, and a surge control valve which allows the surge-free operation. A gearbox transfers power from the APU 116 main shaft to an oil-cooled electrical generator for generating electrical power. Mechanical power is also transferred inside the gearbox to engine accessories such as a fuel control unit, a cooling fan and a lubrication module. There may be a starter motor connected through the gear train that performs a starting function of rotating the APU main shaft using electrical battery and/or ground electrical or pneumatic power. The APU control system 150 can operate the APU gearbox to selectively couple and decouple loads to/from the APU output shaft. The APU control system 105 can also open and close air valve 125c to selectively allow and prevent flow of pressurized air generated by the APU 116 to the aircraft pneumatic system such as the ECS 108.

The APU 116 in one embodiment is generally operated as shown in Figure 2. The APU start is initiated when commanded by the aircraft pilot (202) e.g., by turning the Master APU control 152 from "OFF" to "ON" and then momentarily to "START". Once commanded, aircraft systems provide electrical or pneumatic power to accelerate APU 116 compressor to a point where fuel can be supplied to the combustor and the fuel can be ignited. After the APU 116 combustor is ignited, the aircraft power (motor or pneumatic driver) that supports APU start is gradually removed until APU combustion is sustained self-sufficiently by the mixture of APU compressor air and fuel. APU start is concluded once APU reaches its 100% rated speed (204). A cockpit display typically displays the status of the APU, i.e., that it is ON and what percentage of its rated speed it is operating at.

After APU 116 starts at the 100% rated speed of the APU, the APU begins operating in steady state operation where it is capable of providing electrical power and/or pneumatic power to the aircraft. An example principle of APU 116 operation in this stage consists of the following: the aircraft air inlet system provides air to the APU compressor. Pressurized air is conducted to the APU 116 combustor. At this stage, fuel is added to the combustor and the mixture is auto-ignited and directed to the APU turbine. As the air expands, the turbine's rotation provides shaft power to accessories linked to the APU 116 shaft (typically an electrical generator). Pressurized air is bled from the APU compressor to feed pneumatic power to the aircraft systems.

In typical operation, once the main engines have started (block 54) and begin applying pneumatic compressed air and electrical power to the aircraft (block 56), the pilot may command the APU to shut down (block 58).

To manually turn off the APU, the pilot may depress the STOP button 154. The APU control system 150 typically removes the loads from the APU and times an APU cooldown time as described above (see FIG. 2A) before shutting down the APU.

Alternatively, in an emergency (e.g., the APU has caught fire), the pilot may depress the guarded "FUEL SHUTOFF" button 156 to immediately cut off the APU's fuel supply. As noted above, it is also known for the FADEC to monitor various parameters associated with APU operation and provide an immediate (or sometimes delayed by a certain amount of time) automatic shutoff.

Example embodiments herein expand such autonomous operation by providing a conditioned autonomous APU shutdown based on an automatic cooldown time. Such autonomous automatic shutdown may be performed by a processor arrangement or computer arrangement such as the FADEC 150 comprising at least one processor executing software instructions stored in at least one non-transitory memory and using a real time clock (RTC) 160 to time intervals. Other embodiments may provide a controller that is based on a hardware ASIC containing logic circuitry including a hardware timer and comparators, or a combination of hardware and software, as those skilled in the art will understand.

Such autonomous automatic shutdown may interact with manual input provided by the pilot so the pilot may choose to keep the APU on, but will automatically detect whether there is a load on the APU and if there is none, operate the APU instead in a lower temperature cooldown mode until the pilot decides to turn off the APU, at which point the control system can immediately turn off the APU because it has already been operating at a stabilized cooldown temperature. - In particular, there are times when the pilot will or may soon demand power again from APU and would like APU power to be available immediately without having to restart APU. It is difficult to list all reasons why a pilot might wish to keep the APU on and increase the fuel burn of the mission but example reasons include:
ETOPS (Extended-range Twin-engine Operations Performance Standards) operation where the pilot continues the mission with one engine inoperative and wishs APU to remain "on" during the whole flight
Airline policy for specific airport operations
Pilot wish and shutdown APU just after takeoff.

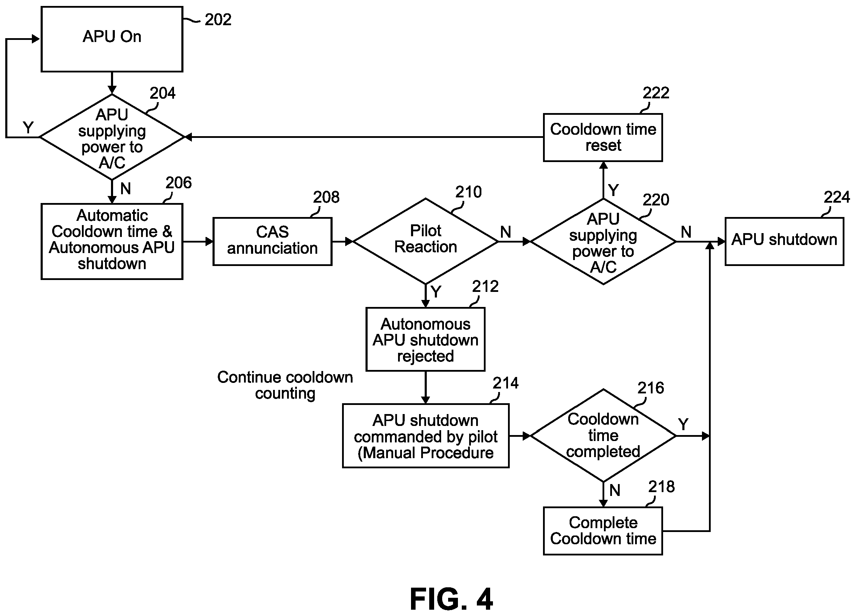

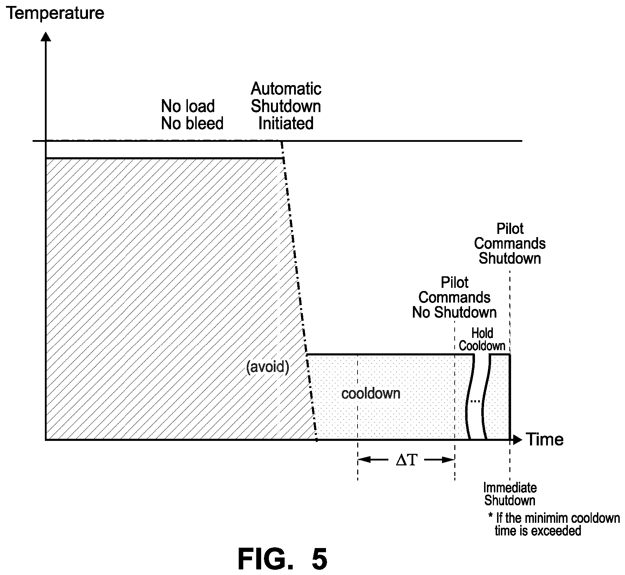

In example embodiments, the APU control unit 150 will not wait for pilot input to start the cooldown time, it will instead be automatically initiated. In parallel, the control unit 150 will also set autonomous APU shutdown. Then, after a measured cooldown time, the APU will shut down if the pilot does not take any action e.g., to override the shutdown. As shown in FIG. 4, in example embodiments:
a) the APU control unit 150 knows if/when the APU is on (block 202) and is providing power to the aircraft (decision block 204); if the APU is not applying power to the aircraft ("N" exit to decision block 204), the autonomous APU shutdown state is set, the control system 150 decouples the loads from the APU 116 so the APU can operate at a lower stabilized cooldown temperature, and the cooldown time counting is automatically initiated (block 206).
   In one example embodiment, if the APU control unit 150 detects that the APU is not supplying any of generated electrical current or bleed air or mechanical power or any power of any sort to the aircraft such that it no longer needs to operate, the APU control unit may initiate the automatic autonomous APU shutdown even though the pilot has not operated controls 152, 154 to order a shutdown.
b) in one embodiment, the autonomous APU shutdown is initiated just if both main engines are running, i.e., decision block 204 conditions automatic shutdown initiation on (i) the APU is supplying no power to the aircraft AND (ii) engine 102 and engine 104 are each running.
c) during the timed APU cooldown time, the Engine Indicating and Crew Alerting System ("EICAS") cockpit display displays a message announcing to the pilot that APU is doing cooldown and will be shut down soon (block 208)
d) if the pilot decides to keep the APU running, even though is not supplying any power to the aircraft, the pilot may command a new start through a master switch 152 and the APU control unit will reject the autonomous APU shut down (block 212) but it will not reset the cooldown counting (decision block 210). See FIG. 5. Thus, in this embodiment, the pilot is able to override the autonomously-initiated APU shutdown by operating a control. In this case, the APU control system will not attempt to autonomously shut down the APU again (to reduce cockpit workload) but will instead continue operating the APU is a no-load, no-bleed cooldown mode while waiting for a command by the pilot via controls 152, 154 to shut down the APU. This example embodiment thus interprets the pilot's rejection of the autonomous shutdown as "don't shut down the APU automatically, I will tell you when to shut down the APU". However, in example embodiments, the cooldown interval timing and associated APU operation begun at block 206 is continued to ensure proper APU cooldown while being more responsive to the pilot.
e) Thus, even if the pilot rejects the autonomous APU shutdown, the automatic cooldown time continues counting while the system waits for further input from the pilot.

The pilot will eventually command an APU shutdown by operating controls 152, 154. At that time, the APU will be immediately shutdown (block 224) after the pilot command (block 214) if:
electrical and/or pneumatic power is not extracted from APU (decision block 220) AND
the cooldown time is fully accomplished/has expired (decision block 216, block 218). See FIG. 5.

If the pilot commands APU shutdown before the cooldown period has expired, the control system will still wait until the cooldown time has completed before shutting down the APU (block 216, 218). However, the pilot's shutdown command does not extend or reset the cooldown time period in example embodiments. Rather, the automatic countdown time which the example embodiment control system began counting at block 206 continues to be counted. There are thus at least two different scenarios after a pilot intervention/override:
(i) if the pilot's manual shutdown command is received before the automatic countdown of the cooldown time has not yet expired, the system will wait the remaining cooldown time before shutting down the APU; thus a controller that operatively connected to control the APU will start timing an APU cooldown time interval; receive a pilot APU shutdown command after starting timing of the APU cooldown time interval; and wait until the time remaining in the APU cooldown time interval expires before shutting down the APU in response to the pilot APU shutdown command.
(ii) if the pilot's manual shutdown command is received after the automatic countdown of the cooldown time has expired as shown in FIG. 5, the system will immediately shut down the APU (since APU cooldown has already been accomplished) conditioned on first making sure the aircraft is not demanding any electrical or pneumatic power from the APU.

During the automatic cooldown time, if any power is extracted from the APU (decision block 220), automatic shutdown is aborted, the automatic cooldown counting is reset (block 222) and the FIG. 4 process again monitors for the APU no longer supplying power (load or bleed) to the aircraft (block 204).

## Claims

1. An auxiliary power unit control system comprising:
a computing arrangement comprising at least one processor that is operatively connected to control an auxiliary power unit (APU) (116) on board an aircraft, the at least one processor being configured to perform operations comprising:
automatically initiates a cooldown operation of the APU on determining that the aircraft is not demanding electrical and/or pneumatic power from the APU
following the initiation of the cooldown operation, receiving a manual APU shutdown command;
when the shutdown command is received before an APU cooldown time interval has expired, wait the remaining cooldown time before shutting down the APU (116); and
when the shutdown command is received after the cooldown time interval has expired, shut down the APU conditioned on first determining that the aircraft is not demanding any electrical or pneumatic power from the APU.

2. The auxiliary power unit control system of claim 1 wherein the at least one processor resets the APU cooldown time upon detecting a demand of the aircraft for electrical and/or pneumatic power.

3. The auxiliary power unit control system of claim 1 wherein the at least one processor conditions shutting down the APU (116) on operation of plural main engines of the aircraft.

4. The auxiliary power unit control system of claim 1 wherein the APU cooldown time comprises a time period during which the APU (116) operating temperature is stabilized after loading on the APU is removed.

5. The auxiliary power unit control system of claim 1 wherein the at least one processor is further configured to remove loading on the APU (116) in order to allow the APU to cool down.

6. An auxiliary power unit control method performed by at least one processor, the method comprising the at least one processor:
automatically initiating a cooldown operation of the APU (116) on determining that the aircraft is not demanding electrical and/or pneumatic power from the APU (116);
following the initiation of the cooldown operation, receiving a manual APU shutdown command;
when the shutdown command is received before an APU cooldown time interval has expired, waiting the remaining cooldown time before shutting down the APU; and
when the shutdown command is received after the cooldown time interval has expired, shutting down the APU conditioned on first determining that the aircraft is not demanding any electrical or pneumatic power from the APU;

7. The auxiliary power unit control method of claim 6 further comprising resetting the APU cooldown time upon detecting a demand of the aircraft for electrical and/or pneumatic power.

8. The auxiliary power unit control method of claim 6 further comprising conditioning shutting down the APU (116) on operation of plural main engines (102, 104) of the aircraft.

9. The auxiliary power unit control method of claim 6 wherein the APU cooldown time interval comprises a time period during which the APU (116) operating temperature is stabilized after loading on the APU (116) is removed.

10. The auxiliary power unit control method of claim 6 further comprising automatically removing loading on the APU (116) in order to allow the APU (116) to cool down.

## Patentansprüche

1. Hilfs-Leistungseinheit-Steuersystem, das Folgendes umfasst:
eine Datenverarbeitungsanordnung, die mindestens einen Prozessor umfasst, der wirkverbunden ist, um eine Hilfs-Leistungseinheit (APU) (116) an Bord eines Flugzeugs zu steuern, wobei der mindestens eine Prozessor eingerichtet ist, Operationen durchzuführen, die Folgendes umfassen:
automatisches Initiieren einer Abkühloperation der APU nach Bestimmen, dass das Flugzeug keine elektrische und/oder pneumatische Leistung von der APU anfordert
nach der Initiierung der Abkühloperation Empfangen eines manuellen APU-Abschaltbefehls;
wenn der Abschaltbefehl empfangen wird, bevor ein APU-Abkühlzeitintervall abgelaufen ist, Warten der verbleibenden Abkühlzeit, bevor die APU (116) abgeschaltet wird, und
wenn der Abschaltbefehl empfangen wird, nachdem das Abkühlzeitintervall abgelaufen ist, Abschalten der APU in Abhängigkeit von zunächst Bestimmen, dass das Flugzeug keine elektrische oder pneumatische Leistung von der APU anfordert.

2. Hilfs-Leistungseinheit-Steuersystem nach Anspruch 1, wobei der mindestens eine Prozessor die APU-Abkühlzeit nach Detektieren einer Anforderung von elektrischer und/oder pneumatischer Leistung durch das Flugzeug zurücksetzt.

3. Hilfs-Leistungseinheit-Steuersystem nach Anspruch 1, wobei der mindestens eine Prozessor das Abschalten der APU (116) von einem Betrieb von mehreren Hauptmotoren des Flugzeugs abhängig macht.

4. Hilfs-Leistungseinheit-Steuersystem nach Anspruch 1, wobei die APU-Abkühlzeit eine Zeitperiode umfasst, während der die Betriebstemperatur der APU (116) stabilisiert wird, nachdem die Last von der APU entfernt wurde.

5. Hilfs-Leistungseinheit-Steuersystem nach Anspruch 1, wobei der mindestens eine Prozessor ferner eingerichtet ist, eine Last von der APU (116) zu entfernen, um das Abkühlen der APU zu erlauben.

6. Hilfs-Leistungseinheit-Steuerverfahren, das von mindestens einem Prozessor durchgeführt wird, wobei das Verfahren den mindestens einen Prozessor umfasst, der für Folgendem eingerichtet ist:
automatisches Initiieren einer Abkühloperation der APU (116) nach Bestimmen, dass das Flugzeug keine elektrische und/oder pneumatische Leistung von der APU (116) anfordert;
nach der Initiierung der Abkühloperation Empfangen eines manuellen APU-Abschaltbefehls;
wenn der Abschaltbefehl empfangen wird, bevor ein APU-Abkühlzeitintervall abgelaufen ist, Warten der verbleibenden Abkühlzeit, bevor die APU abgeschaltet wird, und
wenn der Abschaltbefehl empfangen wird, nachdem das Abkühlzeitintervall abgelaufen ist, Abschalten der APU in Abhängigkeit von zunächst Bestimmen, dass das Flugzeug keine elektrische oder pneumatische Leistung von der APU anfordert;

7. Hilfs-Leistungseinheit-Steuerverfahren nach Anspruch 6, das ferner das Zurücksetzen der APU-Abkühlzeit nach Detektieren einer Anforderung von elektrischer und/oder pneumatischer Leistung durch das Flugzeug umfasst.

8. Hilfs-Leistungseinheit-Steuerverfahren nach Anspruch 6, das ferner das Abhängigmachen des Abschaltens der APU (116) von einem Betrieb von mehreren Hauptmotoren (102, 104) des Flugzeugs umfasst.

9. Hilfs-Leistungseinheit-Steuerverfahren nach Anspruch 6, wobei das APU-Abkühlzeitintervall eine Zeitperiode umfasst, während der die Betriebstemperatur der APU (116) stabilisiert wird, nachdem eine Last von der APU (116) entfernt wurde.

10. Hilfs-Leistungseinheit-Steuerverfahren nach Anspruch 6, das ferner das automatische Entfernen einer Last von der APU (116) umfasst, um das Abkühlen der APU (116) zu erlauben.

## Revendications

1. Système de commande d'un groupe auxiliaire de puissance comprenant :
un agencement informatique comprenant au moins un processeur qui est connecté de manière fonctionnelle pour commander un groupe auxiliaire de puissance (APU) (116) à bord d'un aéronef, ledit au moins un processeur étant configuré pour effectuer des opérations comprenant :
initier automatiquement une opération de refroidissement du groupe auxiliaire de puissance lors de la détermination que l'aéronef ne demande pas de puissance électrique et/ou de puissance pneumatique du groupe auxiliaire de puissance, à la suite de l'initiation de l'opération de refroidissement, recevoir une commande manuelle d'arrêt du groupe auxiliaire de puissance ;
lorsque la commande d'arrêt est reçue avant qu'un intervalle de temps de refroidissement du groupe auxiliaire de puissance ait expiré, attendre le temps de refroidissement restant avant d'arrêter le groupe auxiliaire de puissance (116) ; et
lorsque la commande d'arrêt est reçue après que l'intervalle de temps de refroidissement a expiré, arrêter le groupe auxiliaire de puissance à condition de déterminer au préalable que l'aéronef ne demande aucune puissance électrique ou pneumatique du groupe auxiliaire de puissance.

2. Système de commande d'un groupe auxiliaire de puissance selon la revendication 1, dans lequel ledit au moins un processeur réinitialise le temps de refroidissement du groupe auxiliaire de puissance lors de la détection d'une demande de l'aéronef pour de la puissance électrique et/ou de la puissance pneumatique.

3. Système de commande d'un groupe auxiliaire de puissance selon la revendication 1, dans lequel ledit au moins un processeur conditionne l'arrêt du groupe auxiliaire de puissance (116) au fonctionnement de plusieurs moteurs principaux de l'aéronef.

4. Système de commande d'un groupe auxiliaire de puissance selon la revendication 1, dans lequel le temps de refroidissement du groupe auxiliaire de puissance comprend une période de temps pendant laquelle la température de fonctionnement du groupe auxiliaire de puissance (116) est stabilisée après que la charge sur le groupe auxiliaire de puissance a été supprimée.

5. Système de commande d'un groupe auxiliaire de puissance selon la revendication 1, dans lequel ledit au moins un processeur est en outre configuré pour supprimer la charge sur le groupe auxiliaire de puissance (116) afin de permettre au groupe auxiliaire de puissance de se refroidir.

6. Procédé de commande d'un groupe auxiliaire de puissance mis en œuvre par au moins un processeur, le procédé comprenant ledit au moins un processeur :
initiant automatiquement une opération de refroidissement du groupe auxiliaire de puissance (116) lors de la détermination que l'aéronef ne demande pas de puissance électrique et/ou de puissance pneumatique du groupe auxiliaire de puissance (116) ;
à la suite de l'initiation de l'opération de refroidissement, recevant une commande manuelle d'arrêt du groupe auxiliaire de puissance ;
lorsque la commande d'arrêt est reçue avant qu'un intervalle de temps de refroidissement du groupe auxiliaire de puissance ait expiré, attendant le temps de refroidissement restant avant d'arrêter le groupe auxiliaire de puissance ; et
lorsque la commande d'arrêt est reçue après que l'intervalle de temps de refroidissement a expiré, arrêtant le groupe auxiliaire de puissance à condition de déterminer au préalable que l'aéronef ne demande aucune puissance électrique ou pneumatique du groupe auxiliaire de puissance ;

7. Procédé de commande d'un groupe auxiliaire de puissance selon la revendication 6, comprenant en outre la réinitialisation du temps de refroidissement du groupe auxiliaire de puissance lors de la détection d'une demande de l'aéronef pour de la puissance électrique et/ou de la puissance pneumatique.

8. Procédé de commande d'un groupe auxiliaire de puissance selon la revendication 6, comprenant en outre le conditionnement de l'arrêt du groupe auxiliaire de puissance (116) au fonctionnement de plusieurs moteurs principaux (102, 104) de l'aéronef.

9. Procédé de commande d'un groupe auxiliaire de puissance selon la revendication 6, dans lequel l'intervalle de temps de refroidissement du groupe auxiliaire de puissance comprend une période de temps pendant laquelle la température de fonctionnement du groupe auxiliaire de puissance (116) est stabilisée après que la charge sur le groupe auxiliaire de puissance (116) a été supprimée.

10. Procédé de commande d'un groupe auxiliaire de puissance selon la revendication 6, comprenant en outre la suppression automatique de la charge sur le groupe auxiliaire de puissance (116) afin de permettre au groupe auxiliaire de puissance (116) de se refroidir.
